**Europäisches Patentamt**

**European Patent Office**

**Office européen des brevets**

(19)

(11) Numéro de publication: **0 148 518**
**B1**

(12)

# FASCICULE DE BREVET EUROPÉEN

(45) Date de publication du fascicule du brevet:
25.01.89

(51) Int. Cl.⁴: **G 01 P 3/46,** G 01 P 13/04

(21) Numéro de dépôt: **84201700.6**

(22) Date de dépôt: **23.11.84**

(54) **Dispositif pour la production d'un signal électrique de vitesse.**

(30) Priorité: **22.12.83 CH 6853/83**

(43) Date de publication de la demande:
**17.07.85 Bulletin 85/29**

(45) Mention de la délivrance du brevet:
**25.01.89 Bulletin 89/4**

(84) Etats contractants désignés:
**CH DE FR GB IT LI**

(56) Documents cité:
**EP-A-0 063 614**
**EP-A-0 077 403**
**EP-A-0 060 639**
**DE-A-1 926 628**
**DE-A-2 046 938**
**US-A-3 882 402**

(73) Titulaire: **Mavilor Systèmes S.A., c/o INFRANOR S.A. Place de la Gare, CH- 1296 Coppet (CH)**

(72) Inventeur: **Plüddemann, Gerhard, Breslauer Strasse 7, D-6902 Sandhausen (DE)**

(74) Mandataire: **Jörchel, Dietrich R.A., c/o BUGNION S.A. 10, route de Florissant Case postale 375, CH- 1211 Genève 12 Champel (CH)**

## Description

L'invention a pour objet un circuit pour la production d'un signal électrique de vitesse proportionnel à la vitesse d'un élément mobile, en particulier à la vitesse d'un élément rotatif, selon le préambule de la revendication 1.

Un circuit de ce genre, traitant des signaux d'entrée continus délivrés par un codeur pour l'obtention du nombre de tours d'un organe tournant, est connu de la demande de brevet EP-A-0 080 639. Ces codeurs comportent un disque d'impulsions solidaire de l'organe tournant, respectivement de son arbre, muni de marques angulairement équidistantes qui sont lues en particulier par des moyens optiques, inductifs ou magnétiques. Le signaux de mesure de ces codeurs varient périodiquement avec l'angle de rotation de l'organe tournant entre deux valeurs extrêmes correspondant à des positions angulaires discrètes, dans lesquelles se trouvent justement une marque, respectivement le milieu entre deux marques voisines du disque devant un détecteur. On obtient ainsi des signaux analogiques de forme sinusoïdale ou quasi-sinusoïdale.

Afin d'engendrer un signal de vitesse, ce circuit connu est agencé de manière à produire une tension somme et une tension différence par l'addition et la soustraction des deux signaux d'entrée analogiques déphasés, et découper de ces tensions des segments de tension dans la zone de ± 45° au moyen des circuits inverseurs et du commutateur de courbe, de telle sorte qu'on obtient une tension auxiliaire sans discontinuité dont la fréquence est doublée relativement à la fréquence des tensions d'entrée, puis cette tension auxiliaire est différenciée et finalement les tensions différenciées sont redressées en fonction de la phase des deux signaux d'entrée analogiques. On obtient ainsi une tension de sortie proportionnelle à la vitesse et dont la polarité correspond au sens de rotation du codeur. Etant donné que par ce procédé connu la détermination de la vitesse de rotation s'effectue par l'obtention de la vitesse de montée de chaque impulsion, le temps de réaction au changement de vitesse doit être très court. Théoriquement, le circuit présentera toujours une tension de bruit superposée au signal utile, bruit qui peut être gênant particulièrement pour des petites vitesses. En outre, les valeurs de crête des signaux du codeur dépendent directement de la tension de sortie du circuit de traitement. Pour cette raison, dans ce procédé des modulations d'amplitude, des changements à long terme, des influences de température ou des chute de tension qui influent sur le chemin de transmission des signaux du codeur, ont pour effet de fausser le signal de mesure. Ces influences sont pratiquement inévitables.

Selon le document EP-A-0 077 403, on utilise également des signaux sinusoïdaux déphasés d'un signal électrique de vitesse, signaux qui sont transformés en signaux rectangulaires au moyen d'un circuit inverseur et d'un circuit transformateur. Au moyen d'un circuit quadrupleur, on obtient un signal de fréquence quadruple qui est transformé en un signal proportionnel à la vitesse au moyen d'un convertisseur fréquence-tension, ce dernier signal n'étant toutefois délivré que si cette vitesse atteint ou dépasse une valeur déterminée. Si par contre la vitesse est inférieure, un signal proportionnel à la vitesse est délivré au moyen d'un différentiateur qui recoit les deux signaux d'entrée déphasés et leurs signaux inversés, et au moyen d'un redresseur synchrone on a par conséquent besoin de deux circuits différents pour engendrer des signaux de vitesse à haut et bas régime de vitesse. En outre, le procédé exige des signaux de codeur précis pour compenser les inconvénients tels que l'influence de la modulation d'amplitude, l'influence de la longueur des conducteurs, la température et le viellissement dans la deuxième méthode. A ceci s'ajoute des problèmes techniques autour du point de commutation d'une méthode à l'autre.

Du document DE-A-2 046 938, on connaît en outre un circuit de détection pour la mesure de la variation de la vitesse angulaire d'un objet tournant subissant de légères variations de vitesse relativement à une vitesse moyenne constante. Ce dispositif travaille également avec deux signaux d'entrée sinusoïdaux déphasés de 90° produits par un codeur angulaire. Ces signaux d'entrée sont transformés en une tension en dents de scie qui est superposée à une tension de référence en dents de scie de fréquence correspondant à une vitesse moyenne constante, dans un dispositif de sommation, de telle sorte que l'on obtient des tensions rectangulaires desquelles on tire finalement un signal représentatif de la variation de vitesse de l'objet tournant. Lors de la transformation des signaux d'entrée sinusoïdaux en une tension en dents de scie on utilise deux circuits inverseurs et un commutateur de courbe avec deux amplificateurs différentiels ayant chaqun deux entrées et une sortie. Aux quatre entrées sont appliqués les signaux d'entrée déphasés et leurs inverses, tandis qu'on obtient sur les sorties, en fonction des grandeurs momentanées des signaux d'entrée, des tensions rectangulaires utilisées pour commander des portes analogiques à traves des portes ET, ces portes analogiques étant situées sur des lignes conduisant les signaux d'entrée et leurs inverses. Dans se circuit de détection l'influence des points de transitions brusques, existant dans ledites tensions en dents de scie, sur le signal de mesure est supprimée. Le procédé travaille théoriquement sans bruit seulement pour une amplitude déterminée des signaux du codeur. Pour des variations de la qualité des signaux du codeur, ce procédé présente les mêmes inconvénients que le procédé précédent.

Du document DE-A-1 926 628, on connaît enfin un dispositif pour engendrer une tension continue proportionnelle à la vitesse utilisant une machine spéciale à tension alternative polyphasée comprenant un inducteur rotatif et un circuit de sélection à commutateurs électroniques. L'inducteur délivre une tension alternative polyphasée de forme trapézoïdale engendrée magnétiquement. Les valeurs de crête des trapèzes sont proportionnelles à la vitesse angulaire du codeur. Les signaux trapézoïdaux sont commutés en fonction de l'angle de rotation et combinés en une tension continue appliquée à une ligne commune, cette tension continue étant proportionnelle à la vitesse angulaire et au sens de rotation. Pour la commande des commutateurs électroniques on utilise deux tensions rectangulaires fournies par un système spécial de capteurs à 4 bit consitué de deux codeurs inductifs décalés l'un par rapport à l'autre de 90° et excités par un bras métallique tournant avec l' inducteur ainsi que les deux tensions rectangulaires inversées. Ce procédé est largement appliqué de manière analogue dans des moteurs à commutation électronique trapezoïdale.

Un circuit pour l'obtention d'un signal de vitesse travaillant avec deux tensions d'entrée sinusoïdales déphasées est également connu de DE-A-3 107 938. A fin de saisie digitale du nombre de tours, le circuit connu est agencé pour délivrer des impulsions de comptage lorsque l'amplitude instantanée du signal de mesure prend une valeur de référence prédéterminée, en particulier lorsque la valeur de la tension passe par zéro, et pour compter les impulsions délivrées dans un intervalle de temps déterminé au moyen d'un compteur d'impulsions. Pour un intervalle de temps déterminé, le nombre d'impulsions compté est alors proportionnel au nombre de tours par unité de temps, c'est-à-dire à la vitesse de rotation. Pour de petites vitesses, cette mesure est toutefois imprécise si on compte seulement un petit nombre d'impulsions dans l'intervalle de temps déterminé, ou, si les intervalles de temps sont allongés de façon adéquate, une telle mesure exige des temps de mesure trop longs, généralement incceptables dans les systèmes de commande et de réglage. Pour affiner la saisie digitale de la vitesse de rotation, en particulier pour de faibles vitesses, on dérive auxiliairement, dans les circuits connus, une grandeur particulière de correction des signaux de mesure que l'on utilise pour améliorer le résultat obtenu à partir du nombre d'impulsions comptées.

A côté des dispositifs susmentionnés, il est connu depuis longtemps d'obtenir une valeur analogique de la vitesse de rotation à l'aide d'un générateur tachymétrique. Un tel générateur délivre toutefois en général un signal de mesure seulement approximativement proportionnel à la vitesse de rotation, ce signal étant en outre soumis à des variations et à des influences pertubatrices.

La présente invention a pour objet un circuit du type décrit au premier paragraphe, susceptible de mesurer tous mouvements, c'est-à-dire aussi bien un mouvement de rotation qu'un mouvement linéaire ou mixte, pour autant qu'un système de senseurs ou de détecteurs délivre les signaux d'entrée déphasés susmentionnés. On connaît par exemple des dispositifs de mesure linéraires qui travaillent selon le principe du codeur incrémental pour la saisie de la vitesse linéaire.

L'invention a pour but d'obtenir une tension analogique proportionnelle à la vitesse et la direction de déplacement sans utiliser de générateur tachymétrique, cette tension pouvant être utilisée comme valeur effective de la vitesse dans un système de commande ou de réglage comme c'est le cas de la tension analogue obtenue au moyen d'un générateur tachymétrique; cette tension doit être dans une grande mesure indépendante de la qualité de la forme sinusoïdale des signaux d'entrée, de telle sorte qu'il soit possible d'utiliser sans autre des signaux périodiques présentant pratiquement toutes les formes quasi-sinusoïdales possibles même relativement éloignées d'une forme sinusoïdale, comprenant également des signaux de forme trapézoïdale et triangulaire. En outre, le circuit selon l'invention doit délivrer des signaux encore utilisables même pour de très petites vitesses et doit par exemple pouvoir encore travailler correctement dans des circuits de servo-régulation pour une vitesse proche de zéro.

Ce but est atteint au moyen des caractéristiques données dans la partie caractérisante de la revendication 1.

La solution selon l'invention consiste ainsi simplement, en principe, tout d'abord à diviser l'un par l'autre des signaux d'entrée périodiques obtenus d'une manière quelconque sous la forme de tensions déphasées de 90°, de transformer ensuite la fonction tangente obtenue par l'utilisation de la fonction arc-tangente en un signal de tension proportionnel au déplacement et finalement d'obtenir, par différenciation, une tension proportionnelle à la vitesse. Par cette méthode, les irrégularités et les distorsions des signaux d'entrée comme des signaux intermédiaires sont supprimées dans une grande mesure par le calcul de la valeur moyenne, de sorte que la qualité du signal de sortie analogique résultant est comparable à la qualité d'un signal délivré par un bon générateur tachymétrique utilisable dans les servo-systèmes et dépasse cette dernière, en particulier pour de faibles vitesses les problèmes inhérents à l'utilisation de générateurs tachymétriques, en particulier les problèmes causés par les balais et l'inertie sont en outre éliminés. En outre, la provenance des deux signaux d'entrée déphasés est sans importance; ils peuvent être engendrés par des générateurs, respectivement des codeurs de construction quelconque, opérant selon un mode optique, magnétique, linéaire ou rotatif.

Des formes d'exécution judicieuses du circuit selon l'invention sont définies dans les revendications dépendantes.

Le dessin annexé représene, à titre d'exemple, une forme d'exécution de l'invention se rapportant à la mesure d'un mouvement de rotation.

La figure 1 représente le schéma-bloc du circuit.

La figure 2 représente la forme des signaux d'entrée et des signaux inversés en fonction du temps.

Les figures 3, 4 et 5 représentent la forme des signaux de commutation dérivés des signaux d'entrée.

La figure 6 représente les impulsions de suppression également dérivés des signaux d'entrée.

Les figures 7 et 8 représentent les signaux de sortie du commutateur de courbe dérivés de sections égales des courbes des signaux d'entrée.

La figure 9 représente le signal de sortie du diviseur constitué de sections égales de la fonction tangente de l'angle de rotation.

La figure 10 représente le signal de sortie du convertisseur tangente-arc tangente proportionnel à l'angle de rotation constitué de sections égales.

La figure 11 représente le signal obtenu à la sortie du différentiateur après différentiation des signaux selon la figure 10.

La figure 12 représente la tension analogue résultante proportionnelle à la vitesse de rotation.

La figure 13 est un schéma-bloc du convertisseur de courbe 2.

La figure 14 est un schéma-bloc du convertisseur tangent-arc tangente.

La figure 15 est un schéma-bloc du circuit de suppression 9.

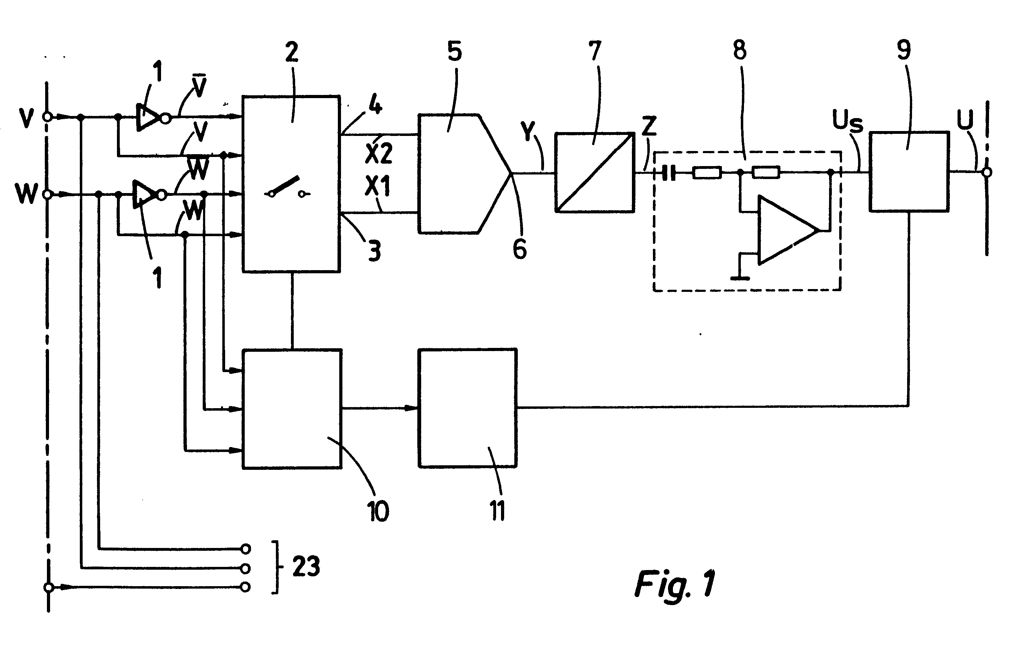

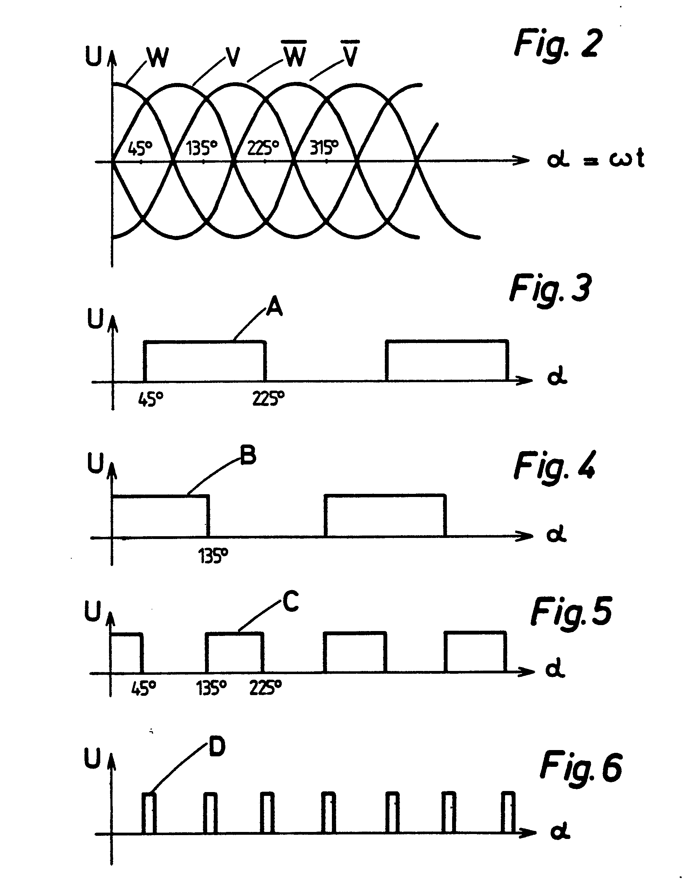

Les signaux d'entrée v et w traités par le circuit selon la figure 1 sont représentés à la figure 2. Dans l'exemple considéré, ils sont constitués par des tensions sinusoïdales U déphasées mutuellement de 90°. Ces tensions périodiques sont produites par un codeur connu muni de deux détecteurs, par exemple par un codeur optique. Les deux signaux d'entrée peuvent être représentés de manière connue par $v = U_0 . \sin \alpha$ et $W = U_0 . \cos \alpha$, ou $U_0$ représente l'amplitude de la tension U et $\alpha = \omega t$, $\omega$ étant la fréquence circulaire des signaux périodiques et t le temps. Le codeur délivrant les signaux d'entrée est conçu de telle sorte que le temps $\tau$ nécessaire à la partie tournante, respectivement à son arbre, pour effectuer un tour complet est égal à un multiple entier de la période T des signaux d'entrée, c'est-à-dire que $\tau = N.T$, ou N est en nombre entier. Entre l'angle de rotation de la partie tournante et l'angle $\alpha$ on a dés lors la relation $\alpha = N. \varphi$ et la fréquence circulaire $\omega$ des fonctions d'entrée est égale à N fois la vitesse angulaire de la partie tournante.

Le circuit représenté à la figure 1 présente les éléments suivants:

- un circuit d'inversion 1 auxquels sont appliqués les deux signaux d'entrée v et w,

- un commutateur de courbe électronique 2 présentant quatre entrées et deux sorties 3 et 4,

- un circuit diviseur 5 branché à la suite du commutateur de courbe 2,

- un convertisseur tangente-arc tangente 7,

- un circuit différentiateur 8,

- un circuit de suppression 9 ayant pour effet de supprimer les points de discontinuité résultant de la différentiation et délivrant, en tant que signal de sortie, une tension analogique proportionnelle à la vitesse de rotation de l'élément tournant,

- une logique de commmande 10 connectée à trois des quatre conducteurs conduisant aux entrée du commutateur de courbe 2 et commandant ce commutateur de courbe 2 à l'aide d'impulsions de commutation A, B, C (figures 3, 4 et 5, et

- un générateur d'impulsions 11 également commandé par la logique de commande 10 et qui commande le circuit 9 à l'aide d'impulsions de suppression D (figure 6).

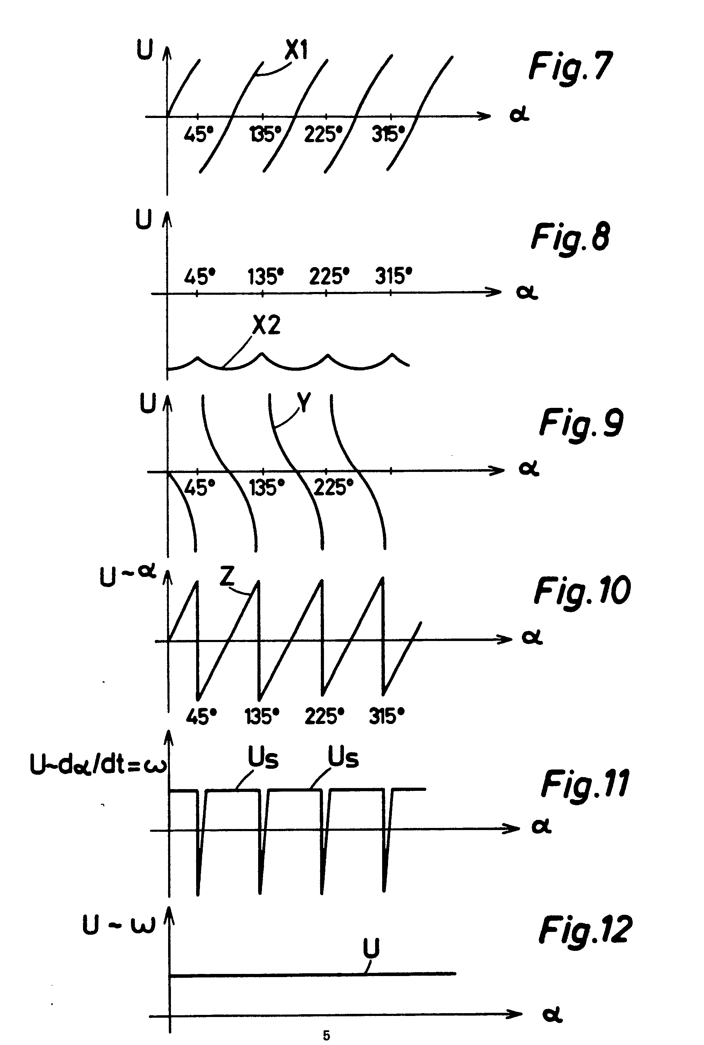

Les deux signaux d'entrée v et w sont appliqués d'une part directement à deux entrées du commutateur de courbe 2 et d'autre part, à travers deux inverseurs du circuit d'inversion 1 à deux autres entrées du commutateur de courbe 2. Les signaux d'entrée v et w sont transformés par le circuit d'inversion 1 en deux signaux inverses $\bar{v}$ et $\bar{w}$ en conservant leur déphasage, ces signaux étant également représentés à la figure 2. De cette manière, le commutateur de courbe 2 reçoit quatre signaux déphasés successivement de 90° $v, w, \bar{v}, \bar{w}$ qui sont commutés par segments sur les deux sorties 3 et 4 de telle sorte qu'il apparaît sur ces sorties deux successions de signaux périodiques x1 et x2 (figures 7 et 8). Ces segments de signaux x1 et x2 sont constituées de segments de courbes semblables et se succédant périodiquement, des courbes constituant les signaux d'entrée $v, w, \bar{v}, \bar{w}$ et ils sont choisis de telle sorte qu'une division subséquente des segments de signaux x1 par les segments de signaux x2 peut être exécutée aisément, c'est-à-dire de telle sorte que dans le diviseur, c'est-à-dire dans les segments de signaux x2, il n'y ait pas de passage par zéro et que le signal quotient résultant, qui représente la fonction tangente tan $\alpha$, ne soit pas trop grand en vue d'un traitement ultérieur commode. Les segments de signaux x 1 et x 2, s'étendant sur 90°, sont de préférence choisis de telle sorte que la courbe résultante de la fonction tangente soit toujours située dans une plage angulaire de - 45° à + 45° (figure 9).

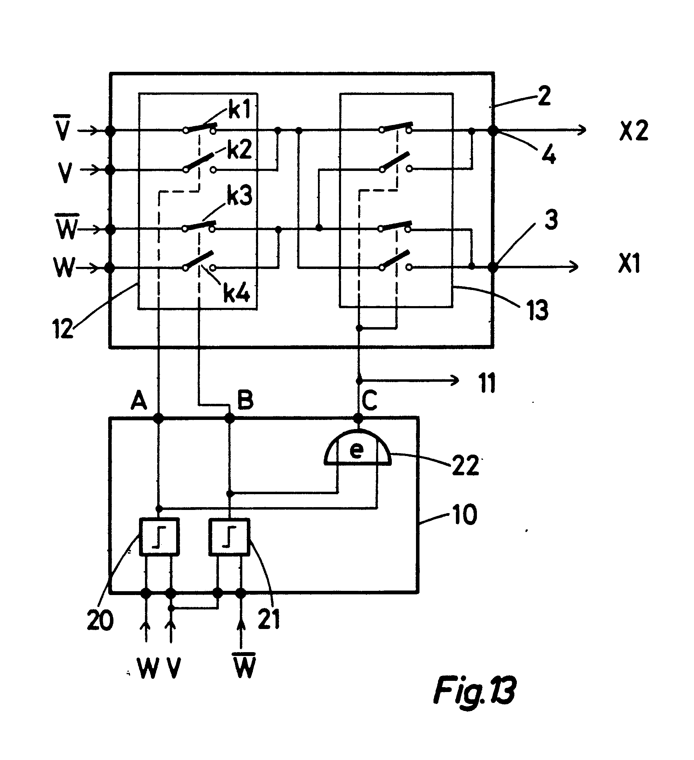

La figure 13 illustre le principe de construction d'un commutateur de courbe 2 constitué, dans l'exemple considéré de deux commutateurs analogiques 12 et 13 branchés en série et comprenant chacun quatre éléments de commutation électroniques commandés par la logique de commande 10. Les commutateurs analogiques 12 et 13 sont constitués par exemple par les éléments de circuit TL 191 de TEXAS INSTRUMENTS ou des éléments HI 201 de la firme HARRIS SEMICONDUCTOR. La logique de commande 10 comprend deux comparateurs connus 20, 21 aux sorties desquels est branchée une porte OU EXCLUSIF 22. Les comparateurs 20, 21 sont connectés de telle sorte qu'ils travaillent comme un trigger de SCHMITT.

Dans l'exemple considéré, le comparateur 20 compare les amplitudes instantanées des deux signaux d'entrée v et w et délivre des impulsions de tension agissant comme impulsions de commutation A (figure 3) dans les intervalles de temps dans lesquels l'amplitude instantanée du signal d'entrée v est supérieure à celle du signal d'entrée w. Ces impulsions de commutation A commandent les éléments de commutation k1 et k2 du commutateur analogique 12 qui prennent l'état représenté à la figure 13 en présence d'une impulsion de commutation A et leur autre état en l'absence d'une telle impulsion de commutation. Le comparateur 21 compare les amplitudes instantanées du signal d'entrée v et du signal d'entrée inversé w̄ et délivre des impulsions de commutation 8 (figure 4) dans les intervalles de temps dans lesquels l'amplitude instantanée du signal d'entrée v est supérieure à celle du signal d'entrée inversé w̄. Ces impulsions de commutation B commandent les éléments de commutation k3 et k4 du commutateur analogique 12 qui prend l'état représenté à la figure 13 en présence d'une impulsion de commutation B et son autre état en l'absence d'une telle impulsion de commutation B.

Les quatre éléments de commutation du commutateur analogique 13 sont commandés par les impulsions de commutation C (figure 5) produites par la porte OU EXCLUSIF 22, ces impulsions C apparaissant seulement lorsque seule l'une des deux impulsions de commutation A ou B est présente et ayant dès lors une durée qui n'est égale qu'à la moitié de la durée d'une impulsion A ou B. Les quatre éléments de commutation du commutateur analogique 13 occupent la position représentée au dessin en présence d'une impulsion de commutation C, tandis qu'ils occupent leur autre position en l'absence d'une telle impulsion.

Le début et la fin des impulsions de commutation coïncident ainsi pratiquement avec les points d'intersection des courbes des signaux d'entrée comparés deux à deux

Dans les positions des éléments de commutation représentés à la figure 13, le signal d'entrée inversé ṽ est commuté sur la sortie 4 et le signal d'entrée inversé w̄ est commuté sur la sortie 3, ce qui correspond, selon les figures 2 à 4, à la présence d'une impulsion de commutation A et une impulsion de commutation B et en l'absence d'une impulsion de commutation C et qui se produit, selon la représentation de la figure 2, dans la zone angulaire allant de α = 45° a α = 135°. Ensuite, aussi longtemps que les impulsions de commutation A et C sont présentes et qu'il n'y a pas d'impulsions de commutation B, le signal d'entrée inversé ṽ est commuté sur la sortie 3 et le signal d'entrée w sur la sortie 4, ce qui se produit dans la plage angulaire allant de α = 135° à α = 225°.

Aussitôt que cessent les impulsions de commutation A et C et que l'impulsion de commutation B n'est pas encore présente, le signal d'entrée v est commuté sur la sortie 4 et le signal d'entrée inversé w̄ est commuté sur la sortie 3, ce qui se produit dans la plage angulaire allant de α = 225° à α = 315°.

Ensuite, commencent les impulsions de commutation B et C, ce qui a pour effet, aussi longtemps que l'impulsion A n'est pas présente, de commuter le signal d'entrée v sur la sortie 3 et le signal d'entrée w sur la sortie 4, ce qui se produit dans la plage angulaire allant de α = 315° à α = 45° et ainsi de suite.

De cette manière, on obtient sur les sorties 3, respectivement 4, du commutateur de courbe 2, les successions de segments identiques de signaux x1, respectivement x2 représentés aux figures 7, respectivement 8, signaux qui sont appliqués aux deux entrées du diviseur 5. Dans ce diviseur connu, constitué par exemple par le circuit AD 533 de la firme ANALOG DEVICES (USA), les segments de signaux x1 sont divisés par les segments de signaux x2 pour former une succession de signaux quotients y (figure 9). Etant donné que le diviseur 5 ne traite que des tensions d'entrée qui sont soit toutes deux negatives, soit l'une positive et l'autre négative, on obtient dans l'exemple considéré des segments de signaux x2 de tension négative. Les signaux quotients y représentent des signaux de tension correspondant à la fonction tangente tan α sous forme inversée. En raison du choix susmentionné des segments de signaux x1 et x2, on aura affaire chaque fois à la partie de la courbe de la fonction tangente inversée dans la zone comprise entre - 45° et + 45°, les amplitudes des signaux quotients y pouvant être multipliées par un facteur constant adéquat.

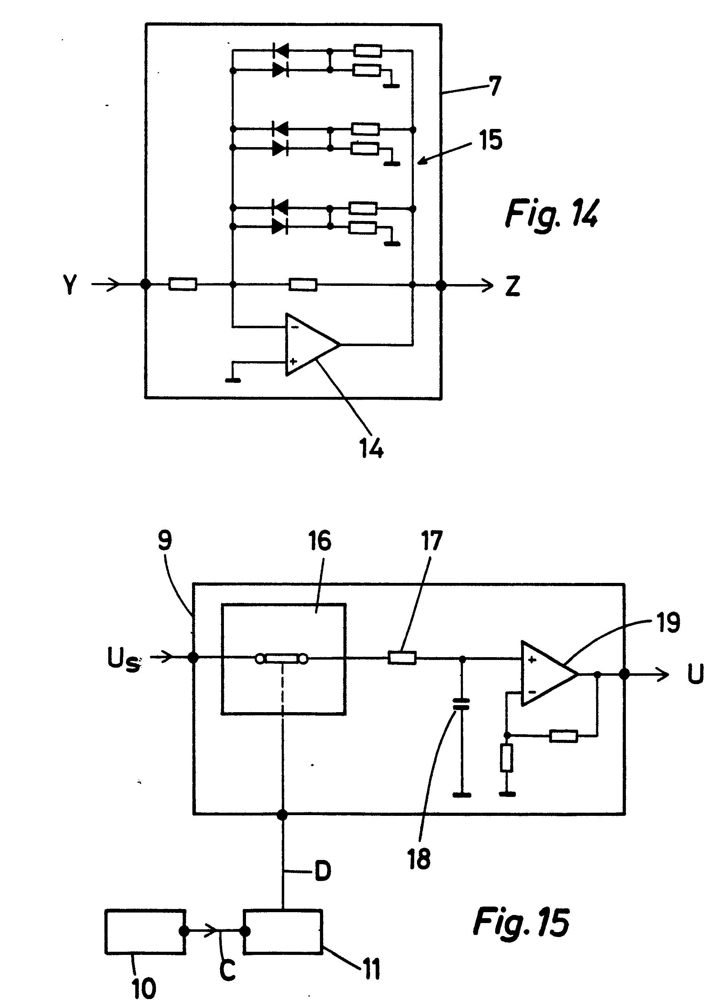

Dans le convertisseur tangente-arc tangente 7, en branchement dans l'exemple considéré, les signaux quotients y sont transformés en une succession de signaux de déplacement z (figure 10) dans le cas considéré en signaux angulaires qui sont constitués par des tensions proportionnelles à l'angle α à l'intérieur des intervalles angulaires successifs α = -45° à + 45°, 45° à 135°, 135° à 225°, etc. et qui forment une courbe en dents de scie. Par l'application de la fonction arc tangente, c'est-à-dire de la fonction inverse de la tangente, à la fonction tangente tan α, l'allure non linéaire de la fonction tangente est linéarisée et l'on obtient des signaux de tension proportionnels à l'angle α respectivement à l'angle de rotation φ de la partie tournante, qui ont une allure linéaire - pour une vitesse de rotation constante - et dont la pente est directement proportionnelle à la vitesse angulaire de l'élément tournant. La figure 14 montre schéma de principe du convertisseur 7 constitué d'éléments connus, à savoir par exemple d'un amplificateur opérationnel usuel 14, par exemple un circuit LH 348 de TEXAS INSTRUMENTS, et d'un réseau de résistances et de diodes 15.

La succession de signaux de déplacement z est différenciée relativement au temps t par le différentiateur 8, de construction connue. Comme les signaux de déplacement z représentent le déplacement angulaire de l'élément rotatif, c'est-à-dire l'angle α, le résultat de la différentiation d α/dt = ω représente la fréquence circulaire, respectivement la vitesse angulaire, qui lui est proportionnelle, de la partie tournante sous la forme de segments de tension $u_s$ (figure 11). Etant donné qu'on différencie une courbe en dents de scie, les segments de tension $u_s$ sont interrompus par des points de discontinuité de courte durée qui constituent des perturbations et qui doivent par conséquent être supprimés.

A cet effet est prévu le circuit 9 constitué dans l'exemple considéré par un amplificateur échantillonneur-bloqueur dont le schéma de principe est représenté à la figure 15 et qui amplifie simultanément le signal utile. Ce circuit comprend un commutateur analogique 16 dont la sortie est reliée à travers une résistance à l'entrée + d'un amplificateur opérationnel usuel 19; en outre, un condensateur d'accumulation 18 est branché à la ligne reliant la résistance 17 à l'amplificateur opérationnel 19. Le commutateur analogique 16, de construction connue peut être constitué par exemple par un circuit TL 191 de la firme TEXAS INSTRUMENTS. En ce qui concerne l'amplificateur opérationnel 19, il peut s'agir par exemple du LM 348 de TEXAS INSTRUMENTS.

Le commutateur analogique 16 est situé sur la ligne conduisant les signaux de tension $u_s$ et il est commandé par les impulsions de suppression D (figure 6) provenant du générateur d'impulsions 11 (figure 1). Ces impulsions de suppression D sont toujours produites de façon brève dans le générateur d'impulsions 11 commandé par la logique de commande 10 au moyen des impulsions de commutation C, lorsqu'une impulsion de commutation C commence ou se termine, c'est-à-dire justement aux valeurs angulaires 45°, 135°, 225°, etc. auxquelles apparaissent des points de discontinuité. Ces impulsions de suppression D qui ont une durée constante et sont un peu plus longue que les discontinuités dans le signal de sortie du différentiateur 8, provoquent chaque fois une ouverture du commutateur analogique 16 et par conséquent un découplage du condensateur d'accumulation 18, lequel, en présence des segments de tension $u_s$, est chargé et dont la tension reste presque constante pendant la durée des impulsions de suppression. De cette manière, les points de discontinuité sont supprimés à la sortie de l'amplificateur opérationnel 19, respectivement du circuit 9, et on obtient une tension u (figure 12) proportionnelle à la vitesse angulaire de l'élément tournant, c'est-à-dire au nombre de tours par unité de temps, cette tension pouvant être utilisée comme valeur efficace dans un système de commande ou de réglage. En particulier, cette tension u peut être appliquée à l'entrée tachymétrique d'un régleur à quatre cadrans auquel est appliquée la tension produite par un générateur tachymétrique conventionnel.

En général, pour le réglage d'un système rotatif, en particulier pour le réglage de servomoteurs dans des systèmes de positionnement, on a besoin aussi bien de la position effective, c'est-à-dire la position angulaire instantanée, que de la vitesse effective. Pour la saisie de ces deux grandeurs, on a eu besoin jusqu'ici d'un indicateur d'angle et d'un générateur tachymétrique. En utilisant des codeurs comme indicateur d'angle engendrant les deux signaux d'entrée susmentionnés v et w, l'invention offre la possibilité avantageuse, au moyen du circuit décrit, de dériver des signaux du codeur aussi bien la vitesse effective que la position effective, de sorte que l'on peut se passer du générateur tachymétrique conventionnel. Sur la figure 1, on a indiqué en 23 les entrées utilisées pour la saisie de la position effective, entrées qui sont reliées aux lignes d'entrée pour les signaux d'entrée v et w.

Au moyen du circuit selon l'invention, il est également possible de reconnaître la direction de rotation qui est donnée par le signe de la tension résultante u. Dans l'exemple représenté à la figure 2, le signal d'entrée w précède le signal d'entrée v de 90°, ce qui correspond à un sens déterminé de rotation. Si l'élément rotatif tourne dans l'autre sens, ce sera alors le signal d'entrée v qui précèdera le signal d'entrée w, ce qui a pour conséquence une pente négative des segments de signaux x1 et partant une fonction tangente positive et des segments de signaux z à pente négative, de telle sorte que l'on obtient une tension résultante u négative.

Dans l'exemple décrit ci-dessus, on a admis que les signaux d'entrée v et w étaient des sinusoïdes idéales. Le circuit peut cependant traiter des formes de courbes s'écartant plus ou moins de la forme sinusoïdale, comprenant d'une part de signaux de forme approximativement trapézoïdale et d'autre part de forme approximativement triangulaire, ces signaux devant seulement satisfaire la condition que leur passage par zéro et leurs valeurs extrêmes moyennes correspondent à celles d'une sinusoïde. Le déphasage des signaux d'entrée v et w n'a également pas besoin d'être exact, mais il suffit qu'il soit approximativement égal à 90°. La condition que les signaux d'entrée v et w doit satisfaire pour que l'on obtienne une tension u utilisable proportionnelle à la vitesse peut également être exprimée de la manière suivante: la figure de Lissajou obtenue par la superposition des signaux d'entrée v et w au moyen d'un oscilloscope doit être une courbe fermée continue, c'est-à-dire sans point de discontinuité. Cette courbe fermée peut s'écarter plus ou moins d'un cercle que l'on obtiendrait avec des signaux d'entrée parfaitement sinusoïdaux. Elle peut en particulier devenir une ellipse si le déphasage diffère de 90°. Dans le circuit de traitement décrit, on effectue la moyenne de toutes les déformations et de tous les écarts d'une forme sinusoïdale (c'est-à-dire d'une figure de Lissajou parfaitement circulaire) et on obtient ainsi comme signal de sortie une tension u dont la moyenne, effectuée sur chaque période des signaux d'entrée, représente correctement la vitesse, cette dernière pouvant présenter cependant une ondulation plus ou moins forte, selon l'importance des écarts que présentent les signaux d'entrée par rapport à une sinusoïde idéale, et ne peut être totalement exempte d'ondulation que dans le cas idéal.

Dès lors, les irrégularités pouvant apparaître dans les signaux d'entrée v et w en raison d'un éventuel vieillissement des détecteurs, de l'inexactitude des marques du codeur ou dues à des effets de température ou d'autres influences perturbatrices, ne jouent pratiquement aucun rôle, en ce qui concerne l'exactitude de la mesurer de la vitesse. Les signaux d'entrée v et w peuvent dès lors sans autre être transmis sur de longues distances sans que les affaiblissements et les perturbations auxquels sont soumis les signaux transmis, n'aient d'importance.

Le circuit selon l'invention délivre également des signaux de sortie utilisables dans le cas de très basses vitesses de rotation et peut par exemple être utilisé dans des circuits de servo-réglage dans lesquels on peut rencontrer des vitesses pratiquement nulles.

L'invention n'est pas limitée à la construction décrite du circuit, mais elle est susceptible de nombreuses variantes. En particulier, il est par exemple possible d'utiliser pour le diviseur 5 d'une manière générale tous les diviseurs à deux cadrans connus. Le circuit de suppression 9 peut également être exécuté de telle sorte qu'avant l'apparition d'un point de discontinuité, on commute sur un autre signal de tension également constitué de segments de tension u, signal de tension obtenu de la même manière que le premier signal de tension u mais déphasé électriquement de 45° par rapport à celui-ci. A cet effet, il est possible de prévoir un second circuit réalisé de la même manière que le circuit décrit, avec les éléments 1 à 8, dans lequel cependant les quatre signaux appliqués au commutateur de courbe sont déphasés électriquement de 45° relativement aux signaux appliqués au premier circuit. Ce déphasage peut être réalisé électroniquement en additionnant d'une part les signaux d'entrée v et w et en les soustrayant d'autre part, c'est-à-dire en réalisant la somme

$\cos \alpha + \sin \alpha \sqrt{2} \sin (45° + \alpha)$,

respectivement la différence

$\cos \alpha - \sin \alpha = \sqrt{2} \cos (45° + \alpha)$,

ce qui se laisse sans autre exécuter au moyen de circuits électroniques connus. Ces signaux somme et différence sont ensuite traités dans un circuit comprenant les éléments 1 à 8 de la même manière que les signaux d'entrée v et w, un circuit remplaçant le circuit 9 décrit assurant la commutation alternative sur les sorties des deux circuits différentiateurs du premier et du deuxième circuits.

## Revendications

1. Circuit pour la production d'un signal électrique de vitesse proportionnel à la vitesse d'un élément mobile, en particulier à la vitesse d'un élément rotatif, à partir de deux signaux d'entrée (w, v) continus variables périodiquement en fonction de la position de cet élément mobile, en particulier de l'angle de rotation (φ), déphasés mutuellement de 90° environ, ayant tous deux en moyenne la même fréquence et un rapport d'amplitude constant et présentant une allure sinusoïdale ou quasi- sinusoïdale, la période (T) ou un multiple entier (N) de la période (T) d'un signal d'entrée (w, v) étant égale au temps pendant lequel l'élément mobile parcourt une distance déterminée, en particulier le temps pendant lequel un élément rotatif effectue un tour complet, comprenant un circuit d'inversion (1) pour l'inversion des signaux, un commutateur de courbe (2) présentant des entrées pour lesdits signaux et leurs inverses ainsi qu'un circuit différentiateur (8) dont le signal de sortie ($u_s$) est transformé en une tension analogue (u) proportionnelle à la vitesse de l'élément mobile, caractérisé en ce que le commutateur de courbe (2) reçoit à ses entrées directement lesdits signaux d'entrée (w, v) et, par l'intermédiaire dudit circuit d'inverson (1), les signaux d'entrée inversés ($\bar{w}$, $\bar{v}$) et comporte une première et une seconde sortie (3, 4), sur lesquelles sont respectivement appliqués des segment égaux des périodes successives des signaux d'entrée et des signaux d'entrée inversés selon une succession prédéterminée, en maintenant leur phase relative, une succession de signaux composée de segments de signaux se répétant périodiquement (x1, x2) apparaissant respectivement sur la première et la seconde sortie (3, 4) ces segments de signaux (x1, x2) étant situés dans un domaine de valeur permettant la division électrique du premier segments de signaux (x1) par le second segment de signal (x2) qu'un circuit diviseur (5) est relié aux sorties (3, 4) du commutateur de courbe (2), agence pour diviser le segment de signal (x1) apparaissant sur la première sortie (3) par le segment de signal (x2) apparaissant sur la seconde sortie (4) en formant une succession de signaux quotients (y) qui correspondent à des segments limités de la courbe temporelle de la fonction tangentielle, respectivement d'une fonction quasi tangentielle des coordonnées de déplacement de l'élément mobile, en particulier de l'angle de rotation ($\alpha = N . φ$), qu'un circuit de conversion tangente-arc tangente (7) est branché à la suite du circuit diviseur (5) pour la transformation des signaux quotients (y) en une suite de signaux de déplacement (z) correspondant à la fonction arc tangente, respectivement à une fonction similaire à la fonction arc tangente de ces signaux quotients (y) et représentant les variations des coordonnées de déplacement, en particulier de l'angle de rotation (α), en fonction du temps (t) à l'intérieur d'intervalles de temps successifs définis par lesdits segments de signaux (x1, x2), que le circuit différentiateur (8) est branché à la suite du circuit de conversion (7) pour différencier les coordonnées de déplacement représentées par les signaux de déplacement (z), en particulier l'angle de rotation (α), relativement au temps (t), de manière à former une suite de segments de tension $(u_s)$ interrompue par des points de discontinuité, ces segments de tension $(u_s)$ présentant une tension dont l'amplitude est proportionnelle à la vitesse de l'élément mobile, et qu'un circuit de suppression (9, 11) des points de discontinuité est branché à la suite du circuit différentiateur (8) pour délivrer ladite tension analogue (u).

2. Circuit selon la revendication 1, caractérisé en ce que le commutateur de courbe (2) est commandable de telle manière que la valeur de la fonction tangente soit constamment située à l'intérieur d'une plage angulaire d'environ - 45° à + 45°.

3. Circuit selon l'une des revendications 1 ou 2, caractérise en ce que le commutateur de courbe (2) est commutable par une logique de commandes (10) comprenant des comparateurs (20, 21) qui comparent les valeurs de chaque paire de signaux d'entrée déphasées d'environ 90° (v, w; v̄, w̄) et délivrent des impulsions de commutation (A; B) durant les intervalles de temps pendant lesquels la valeur de l'un des signaux d'entrée est supérieure à celle de l'autre.

4. Circuit selon l'une des revendications 1 à 3, caractérisé en ce que le circuit de suppression (9, 11) des points de discontinuité est constitué des éléments suivants:

a) un générateur d'impulsions (11) agencé pour produire, au rythme des points de discontinuité des impulsions de suppression (D) dont la durée est un peu plus grande que la durée des discontinuités;

b) un amplificateur échantillonneur-bloqueur (9) comprenant un commutateur analogique (16) commandé par le générateur d'impulsions (11), un amplificateur opérationnel (19) branché à la suite du commutateur analogique à travers une résistance (17) et un condensateur de mémorisation (18) à l'entrée dudit amplificateur opérationnel, ce condensateur étant déconnectable du signal de sortie du circuit différentiateur (8) par le commutateur analogique (16) en présence des impulsions de suppression (D) afin de supprimer les discontinuités.

5. Circuit selon l'une des revendications 3 ou 4, caractérisé en ce que le générateur d'impulsions (11) est commandable de telle manière par ladite logique de commande (10) que des impulsions de suppression (D) sont engendrables au début et à la fin de chaque impulsion de commutation (A; B).

6. Circuit selon l'une des revendications 1 à 3, caractérisé en ce que le circuit de suppression des points de discontinuité est agencé pour traiter un signal de sortie du circuit différentiateur (8) subséquent déphasé d'au moins approximativement 45° relativement au signal de sortie du circuit différentiateur (8) de telle sorte qu'une commutation est opérée alternativement sur les sections exemptes de points de discontinuité de ces deux signaux de sorties.

**Patentansprüche**

1. Schaltungsanordnung zur Erzeugung eines elektrischen Geschwindigkeitssignals, das der Geschwindigkeit eines bewegten Teils, insbesondere der Drehzahl eines rotierenden Teils, proportional ist, aus zwei periodisch als Funktion der Position dieses bewegten Teils, insbesondere des Drehwinkels (φ), veränderlichen, stetigen Eingangssignalen (w, v), welche um ungefähr 90° gegeneinander phasenverschoben sind, im Mittel beide jeweils die gleiche Frequenz und ein konstantes Amplitudenverhältnis haben und einen sinusförmigen oder sinusähnlichen Verlauf aufweisen, wobei die Periode (T) oder ein ganzzahliges Vielfaches (N) der Periode (T) eines Eingangssignals (w, v) gleich der Zeit ist, in der das bewegte Teil eine bestimmte Strecke zurücklegt, insbesondere ein rotierendes Teil eine volle Umdrehung ausführt, mit einer Inversionsschaltung (1) zum Invertieren von Signalen, mit einem Kurvenumschalter (2), der Eingänge für diese Signale und deren invertierte Signale aufweist, und mit einer Differenzierschaltung (8), deren Ausgangssignal $(u_s)$ in eine der Geschwindigkeit des bewegten Teils proportionale analoge Spannung (u) umgewandelt wird, gekennzeichnet dadurch, dass der Kurvenumschalter (2) an seinen Eingängen direkt die erwähnten Eingangssignale (w, v) und, über die erwähnte Inversionsschaltung (1), die invertierten Eingangssignale (w̄, v̄) erhält und einen ersten und einen zweiten Ausgang (3, 4) aufweist, auf welche jeweils gleichartige Abschnitte aufeinanderfolgender Perioden der Eingangs- und invertierten Eingangssignale in bestimmter Folge unter Beibehaltung ihrer relativen Phasenlagen gegeben werden, wobei am ersten bzw. am zweiten Ausgang (3, 4) je eine Signalfolge aus sich periodisch wiederholenden Signalabschnitten (x1, x2) erscheint, welche in einem zur elektrischen Division des ersten Signalabschnitts (x1) durch den zweiten Signalabschnitt (x2) geeigneten Wertebereich liegen, dass eine Divisionsschaltung (5) an die Ausgänge (3, 4) des Kurvenumschalters (2) angeschlossen und dazu eingerichtet ist, jeweils den vom ersten Ausgang (3) herrührenden Signalabschnitt (x1) durch den vom zweiten Ausgang (4) herrührenden Signalabschnitt (x2) unter Bildung einer Folge von Quotientensignalen (y) zu dividieren, welche endlichen Abschnitten des zeitlichen Verlaufs der Tangensfunktion bzw. einer tangensähnlichen Funktion der Wegkoordinaten des bewegten Teils, insbesondere des Drehwinkels ($\alpha$ = N.$\varphi$), entsprechen, dass der Divisionsschaltung (5) eine Tangens-Arkustangens-Konverterschaltung (7) zur Umformung der Quotienten-Signalen (y) in eine Folge von Wegsignalen (z) nachgeschaltet ist, welche der Arkustangensfunktion bzw. einer arkustangensähnlichen Funktion dieser Quotienten-Signale (y) entsprechen und jeweils den Verlauf der Wegkoordinate, insbesondere des Drehwinkels ($\alpha$), als Funktion der Zeit (t) innerhalb aufeinanderfolgender, durch die erwähnten Signalabschnitte (x1, x2) definierter Zeitintervalle darstellen, dass die Differenzierschaltung (8) der Konverterschaltung (7) zum Differenzieren der durch die Wegsignale (z) dargestellten Wegkoordinaten, insbesondere des Winkels ($\alpha$), nach der Zeit (t) nachgeschaltet ist, derart, dass eine Folge von durch Sprungstellen unterbrochenen Spannungsabschnitten ($u_s$) mit einer Spannung gebildet wird, deren Amplitude der Geschwindigkeit des bewegten Teils proportional ist, und dass eine die Sprungstellen ausblendende Schaltung (9, 11) der Differenzierschaltung (8) nachgeschaltet ist, um die erwähnte analoge Spannung (u) zu liefern.

2. Schaltungsanordnung nach Anspruch 1, dadurch gekennzeichnet, dass der Kurvenumschalter (2) derart steuerbar ist, dass der entstehende Verlauf der Tangensfunktion stets innerhalb eines Winkelbereichs von ungefähr -45° bis +45° liegt.

3. Schaltungsanordnung nach Anspruch 1 oder 2, dadurch gekennzeichnet, dass der Kurvenumschalter (2) durch eine Steuerlogik (10) mit Komparatoren (20, 21) umschaltbar ist, welche die Werte jedes Paars zweier um etwa 90° phasenverschobenen Eingangssignale (v, w; $\bar{v}$, $\bar{w}$) vergleichen und Umschaltimpulse (A; B) während derjenigen Zeitspannen abgeben, in denen der Wert eines der Eingangssignale grösser als der des anderen ist.

4. Schaltungsanordnung nach einem der Ansprüche 1 bis 3, dadurch gekennzeichnet, dass die die Sprungstellen ausblendende Schaltung (9, 11) aus folgenden Elementen besteht:

a) einem Pulsgenerator (11), der dazu eingerichtet ist, im Rhythmus der Sprungstellen Austastimpulse (D) zu erzeugen, deren Dauer etwas grösser als die Dauer der Sprungstellen ist;

b) einem Sample-and-Hold-Verstärker (9), welcher einen vom Pulsgenerator (11) gesteuerten Analog-Schalter (16), einen diesem über einen Widerstand (17) nachgeschalteten Operationsverstärker (19) und einen an dessen Eingang liegenden Speicherkondensator (18) aufweist, welcher bei Gegenwart der Austastimpulse (D) zwecks Ausblendung der Sprungstellen durch den Analog-Schalter (16) vom Ausgangssignal der Differenzierschaltung (8) abschaltbar ist.

5. Schaltungsanordnung nach den Ansprüchen 3 oder 4, dadurch gekennzeichnet, dass der Pulsgenerator (11) durch die erwähnte Steuerlogik (10) derart steuerbar ist, dass Austastimpulse (D) jeweils zu Beginn und am Ende jedes Umschaltimpulses (A; B) erzeugbar sind.

6. Schaltungsanordnung nach einem der Ansprüche 1 bis 3, dadurch gekennzeichnet, dass die die Sprungstellen ausblendende Schaltung dazu eingerichtet ist, ein gegenüber dem Ausgangssignal der Differenzierschaltung (8) um wenigstens näherungsweise 45° phasenverschobenes nachfolgendes Ausgangssignal der Differenzierschaltung (8) derart zu verarbeiten, dass abwechselnd auf jeweils sprungstellenfreie Abschnitte dieser beiden Ausgangssignale umgeschaltet wird.

**Claims**

1. Circuit arrangement for generating an electric velocity signal which is proportional to the velocity of a moving part, in particular to the speed of rotation of a rotating part, said velocity signal being generated from two continuous input signals (w, v) which are periodically changeable as a function of the position of this moving part, in particular of the angle of rotation ($\varphi$), and which are phase-shifted with respect to each other by approximately 90°, both having each in the mean the same frequency and a constant amplitude ration and a sinusoidal or sine-like characteristic, the period (T), or an integral multiple (N) of the period (T) of one input signal (w, v) being equal to the time in which the moving part covers a certain distance, in particular the time in which a rotating part carries out one full revolution, comprising an inversion circuit (1) for inverting signals, a curve change-over switch (2) having inputs for said signals and their inverted signals and a differentiating circuit (8) the output signal ($u_s$) of which is converted into an analog voltage (u) which is proportional to the velocity of the moving part, characterized in that the curve change-over switch (2) receives at its inputs directly said input signals (w, v) and via said inversion circuit (1) the inverted input signals ($\bar{w}$, $\bar{v}$), and comprises a first and a second output (3, 4) to which are applied the respective similar sections of successive periods of the input and inverted input signals according to a predetermined sequence, retaining their relative phase relationships, one signal sequence composed of periodically repetitive signal sections (x1, x2) each appearing at the first and at the second output (3, 4), which signal sections are in a range of values which is suitable for dividing the first signal section (x1) electrically by the second signal sections (x2), that a dividing circuit (5) is connected to the outputs (3, 4) of the curve change-over switch (2) and is adapted for dividing the signal section (x1) originating from the first output (3) by the signal section (x2) originating from the second output (4) whilst forming a sequence of quotient signals (y) which correspond to finite sections of the variation with time of the tangent function or of a tangent-like function of the path co-ordinates of the moving part, in particular of the angle of rotation ($\alpha$ = N.$\varphi$), that a tangent/arc tangent converter circuit (7) follows the divider circuit (5) for converting the quotient signals (y) into a sequence of path signals (z) which correspond to the arc tangent function or to an arc tangent-like function of these quotient signals (y) and represent the variation of the path co-ordinates, in particular of the angle of rotation ($\alpha$), as a function of time (t) within successive time intervals defined by the signal sections (x1, x2) mentioned, that the differentiating circuit (8) follows the converter circuit (7) for differentiating the path coordinates represented by the path signals (z), in particular the angle ($\alpha$), after time (t), in such a manner that a sequence of voltage sections ($u_s$) is formed which are interrupted by step positions and which present a voltage the amplitude of which is proportional to the velocity of the moving part, and that a circuit (9, 11) which blanks out the step positions follows the differentiation circuit (8) for supplying said analog voltage (u).

2. Circuit arrangement as claimed in claim 1, characterized in that the curve change-over switch (2) can be controlled in such a manner that the value of the tangent function is always within an angular range of approximately -45° to +45°.

3. Circuit arrangement as claimed in claim 1 or 2, characterized in that the curve change-over switch (2) can be switched over by a control logic (10) comprising comparators (20, 21) which compare the values of each pair of input signals (v, w; v̄, w̄) shifted in phase by about 90°, and which output switch-over pulses (A; B) during the times in which the value of the one input signal is greater than that of the other one.

4. Circuit arrangement as claimed in one of claims 1 to 3 characterized in that the circuit (9, 11) blanking out the step positions consists of the following elements:

a) a pulse generator (11) which is adapted to generate at the rate of the step positions blanking pulses (D) the duration of which is a little greater than the duration of the step position;

b) a sample and hold amplifier (9) which comprises an analog switch (16) controlled by the pulse generator (11), an operational amplifier (19) which follows the analog switch via a resistance (17) and a storage capacitor (18) which is located at the input of said operational amplifier and which can be switched away from the output signal of the differentiating circuit (8) by the analog switch (16) in the presence of the blanking pulses (D) for the purpose of blanking out the step positions.

5. Circuit arrangement as claimed in claim 3 or 4, characterized in that the pulse generator (11) can be controlled by said control logic (10) in such a manner that blanking pulses (D) can be generated at the beginning and at the end of each switch-over pulse (A; B).

6. Circuit arrangement as claimed in one of claim 1 to 3, characterized in that the circuit blanking out the step positions is adapted to process a subsequent output signal of the differentiating circuit (8), which is shifted in phase by at least approximately 45° with respect to the output signal of the differentiating circuit (8), in such a manner that the circuit switches alternately to sections of these two output signals which are free of step positions.

*Fig. 1*

EP 0 148 518 B1

Fig. 2

Fig. 3

Fig. 4

Fig. 5

Fig. 6

EP 0 148 518 B1

Fig.7

Fig.8

Fig.9

Fig.10

Fig.11

Fig.12

5

Fig.13

*Fig. 14*

*Fig. 15*